# EUROPEAN PATENT APPLICATION

(11) **EP 2 854 396 A1**
(43) Date of publication of application: **01.04.2015**
(21) Application number: 13306332.1
(22) Date of filing: 27.09.2013
(51) Int. Cl.: H04N 7/15, H04N 7/14, H04L 12/18

(54) **Method and devices for determining visual attention in multi-location video conferencing**

(71) Applicant: ALCATEL LUCENT, 92100 Boulogne-Billancourt (FR)
(72) Inventor: Tytgat, Donny, 2018 Antwerpen (BE); Lievens, Sammy, 2018 Antwerpen (BE); Aerts, Maarten, 2018 Antwerpen (BE); Namboodiri, Vinay, 2018 Antwerpen (BE)
(74) Representative: ALU Antw Patent Attorneys

(57) **Abstract**

A method for determining video attention of a to be alerted participant (user 1) of a multi-location video conference taking place between a first plurality of participants comprising said to be alerted participant (user1), said first plurality of participants being distributed over a second plurality of locations (room1, room2, ... , roomn), comprises the steps of
- receiving a signal (U1) from said to be alerted participant (user1)
- transmitting respective video data (video room1, video room2,...,video room n) from said respective locations to a video composing an analysis module (VAD)
- generating by said video composing and analysis module (VAD) respective display video data (video display1, video display 2,...,video display n) from said respective video data (video room1, video room 2, ..., video room n) for being transmitted back and being displayed to and in said respective locations
- performing a first analysis of the respective display video data (video display1, video display 2, ...,video display n) for determining the identity of the respective video participants displayed and for checking whether said to be alerted participant (user 1) forms part of the respective video participants displayed in the respective display video data (video display1, video display 2,...,video display n),
- performing a second analysis of the respective video data (video room1, video room 2, ..., video room n) for determining the activity performed by the first plurality of participants in said respective video locations (room1, room2, ..., roomn),
- combining the results of said first analysis and said second analysis for thereby determining whether said to be alerted participant (user 1) is being watched by at least some other participant in another location, and in case said to be alerted participant is being watched by at least some other participant in another location,
- alerting said to be alerted participant (user 1) via the provisioning of a trigger signal (TU1) to a personal device (MD1) of said to be alerted participant (user 1).

## Description

The present invention relates to a method for determining visual attention in multi-location video conferencing.

Present video conferencing systems usually show what the other parties are seeing in an inset on a video displayed at e.g. a large screen present in the different video conferencing rooms. This results in a picture-in-picture presentation where the participants of one room have a large view of the participants of another room, and within this large view a small window is present for showing a view of their own room. The determination of the visual attention, thus whether or not a user is being watched by another user at the other location, has to be performed by the user him or herself. This presents an extra task for this user, which may then result in the user paying less attention to the conversation itself.

A second issue concerns the passive nature of this solution : while the system might display a person on one of the screens, this does not mean that this person is actually being watched by other users. As such it can give a user a wrong impression, by letting him/her believe he/she is being watched without this actually being the case.

Other present solutions such as e.g. a red light on a camera when the camera is recording also show the aforementioned problems. A camera that is recording a person doesn't necessarily imply that someone is actually watching that camera feed showing that same person.

It is thus the object of embodiments of the present invention to provide a method and devices for determining visual attention in multi-location video conferencing systems, but which do not suffer from the above mentioned drawbacks.

According to embodiments of the present invention this object is achieved by the provision of a method for determining video attention of a to be alerted participant of a multi-location video conference taking place between a first plurality of participants comprising said to be alerted participant, said first plurality of participants being distributed over a second plurality of locations, said method comprising the steps of
- receiving a signal from said to be alerted participant
- transmitting respective video data from said respective locations to a video composing and analysis module
- generating by said video composing and analysis module respective display video data from said respective video data for being transmitted back and being displayed to and in said respective locations
- performing a first analysis of the respective display video data for determining the identity of the respective video participants displayed and for checking whether said to be alerted participant forms part of the respective video participants displayed in the respective display video data,
- performing a second analysis of the respective video data for determining the activity performed by the first plurality of participants in said respective video locations,
- combining the results of said first analysis and said second analysis for thereby determining whether said to be alerted participant is being watched by at least some other participant in another location, and in case said to be alerted participant is being watched by at least some other participant in another location,
- alerting said to be alerted participant via the provisioning of a trigger signal to a personal device said to be alerted participant.

In this way a subject is alerted when he/she is being monitored by participants, which monitoring is detected via analysis of the videos of the different views over the different locations which can be e.g. video conference rooms.

The present invention relates as well to embodiments of a video composing and analysis module being adapted to receive from respective video conferencing clients respective video data, and at least one signal indicative of a participant of a multi-location video conference to be alerted upon being watched by another participant in another location,
- to generate from said respective video data, respective display video data for re-transmission to said respective video conferencing clients,
- to perform a first analysis of the respective display video data for determining the identity of the respective video participants displayed in said respective display video data and for checking whether said to be alerted participant forms part of the respective video participants displayed in the respective display video data,
- to perform a second analysis of the respective video data for determining the activity performed by a first plurality of participants in said respective video locations,
- to combine the results of said first analysis and said second analysis for thereby determining whether said to be alerted participant is being watched by at least some other participant in another location, and in case said to be alerted participant is being watched by at least some other participant in another location,
- to generate a trigger signal for transmission to the video conferencing client in the location of said participant to be alerted .

The present invention relates as well to embodiments of a video conferencing client adapted to receive from at least one camera in a video conferencing location at least one video recording signal, to generate from said at least one video recording signal a respective video data signal for provision to a video composing and analysis module, said video conferencing client further being adapted to receive from a participant in said video conferencing location an input signal indicative of said participant desiring for being alerted upon said participant being watched by at least one other participant in another video conferencing location), said video conferencing client further being adapted to receive from said video composing and analysis module, display video data for being distributed to at least one display device in said location coupled to said video conferencing client, said video conferencing client further being adapted to receive from said video composing and analysis module a trigger signal for further provisioning to a personal device of said participant to be alerted .

The present invention relates as well to embodiments of a video conferencing system comprising a plurality of the above described video conferencing clients and a video composing and analysis module as described in a previous paragraph.

The present invention relates as well to embodiments of an end-user device communicatively coupled to such a video conferencing system in, said end-user device being adapted to register itself to said video conferencing system, to provide a signal indicative of the user of said end-user device desiring to be alerted upon being watched by another participant in another location of a video conference in which said video conferencing client is involved, said end-user device being further adapted to identify whether a signal received from said video conferencing client concerns a trigger signal being indicative of said user of said end-user device being watched by another participant in another location of said video conference, and, if so, to activate an actuating means within said end-user device.

In an embodiment said actuating means is a display, or a sound generating device, or a vibrating device.

Such an implementation thereby provides a simple system that alerts a person upon this person being watched by another participant in another room. This provides an important step forward in the general acceptation of video conferencing solutions with many cameras / displays.

In an embodiment this end-user device is a mobile device such as a mobile phone or a laptop or a gaming console or an intelligent watch, intelligent patch on clothing, intelligent jewelery etc.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the hollowing description of an embodiment taken in conjunction with the accompanying drawings wherein
Fig. 1a shows an exemplary situation of a video conference situation taking place between two groups situated in two separate conferencing rooms,
Figs. 1b-c show more general embodiments of a video conference system with a video conference taking place between a first plurality of participants being distributed over a second plurality of locations, and using a central video conferencing server
Fig. 2 shows a high level embodiment of a video analysis and decision module for performing embodiments of the method,
Fig. 3 depicts a detailed embodiment flowchart of the method,
Fig. 4 depicts a detailed embodiment of an end-user mobile device capable of being connected to embodiments of video conferencing systems in accordance to the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

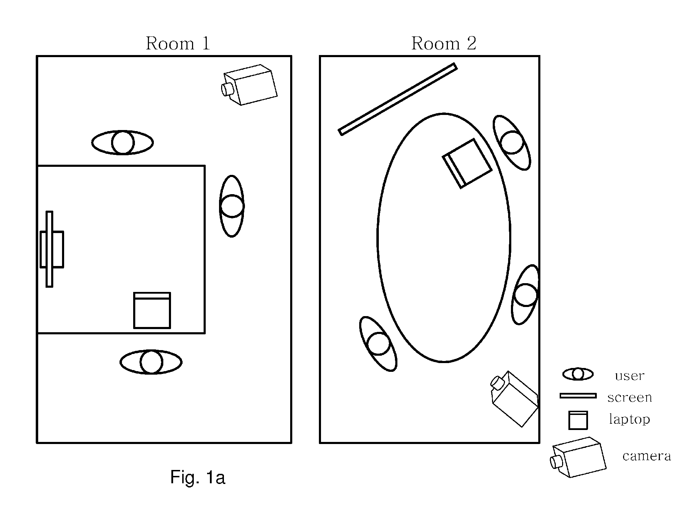

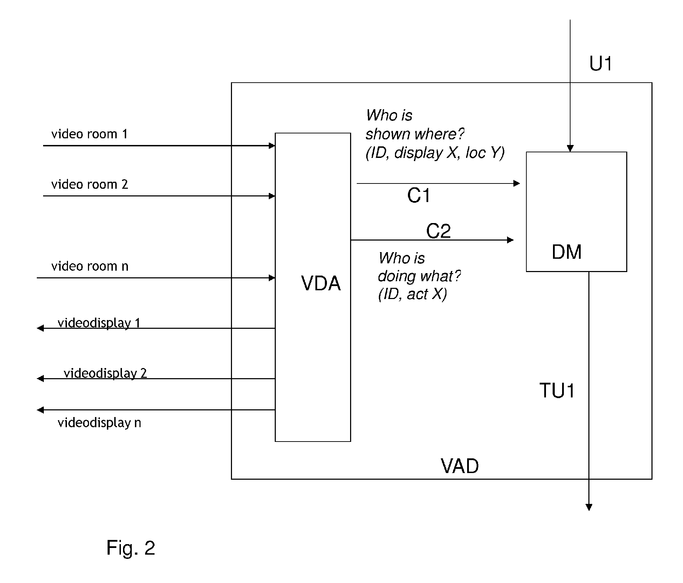

Embodiments of the method attempt to determine who is watching someone in a video conference taking place between participants situated in separate locations such as video conference rooms, and more in particular to also alert such a person if he/she desires so. An exemplary video conference situation taking place between participants in two rooms is depicted in Fig. 1a, showing each room being occupied by 3 participants. Each room furthermore is equipped with one or two cameras for recording the participants, a large conference screen, each showing video content related to the conference taking place between the 6 participants . The respective video contents, for being shown on the respective screens, is determined by a video conference server, which is not shown in fig. 1a, but whose functionality will be discussed more into depth when describing Fig. 2.

As is shown in Fig. 1a, the rooms can also be further equipped with a number of personal screens such as screens of laptops, smart phones, tablets, gaming consoles in which a single person can also select who he/she sees from the remote participants.

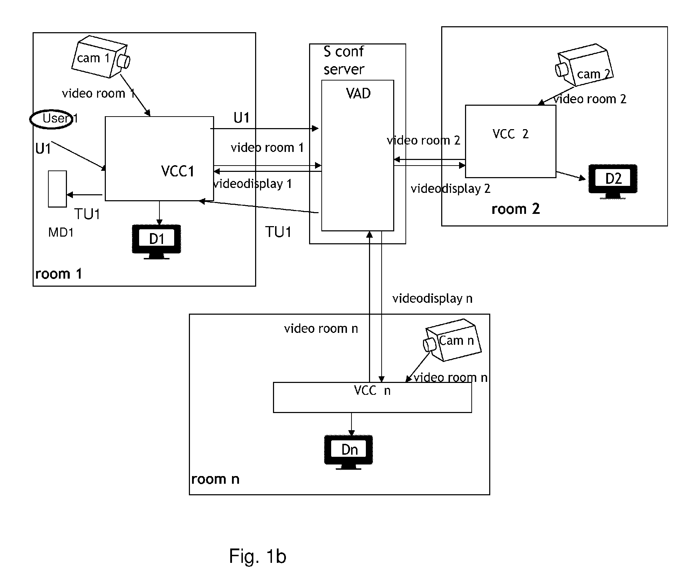

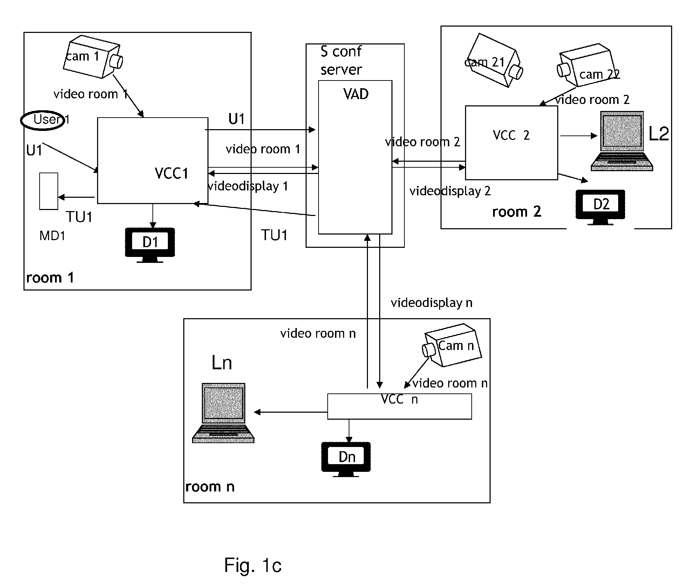

It is to be remarked that Fig. 1a does not show the video conferencing devices which are used for setting up the video conference itself. These are however shown on figs. 1b and 1c depicting a more general situation of a video conference taking place between n different locations, denoted by room1, room2 to room n. Despite the fact that these locations are denoted as rooms, such a location can as well be somewhere outdoors, or in an indoor location which may be different from a "room", e.g. a working floor, a theatre, a garage, etc.. Each location is equipped by one or more video cameras for recording the different participants of the video conference at that particular location. In figure 1 b a situation is depicted where each room has one camera, respectively denoted cam1, cam2 to camn. However in other situations several cameras may be used for recording the different participants in one location. This is for instance depicted in fig. 1c where room 2 is equipped with 2 cameras, cam21 and cam22. Moreover in fig. 1c, also some personal devices with cameras are present, such as laptop L2 in room 2 and Ln in room n. These can as well record a single user watching his/her laptop screen, or, alternatively, the cameras of the laptop themselves can be used to record a view of the room.

Each of the locations furthermore is equipped with a video conferencing client device, respectively denoted VCC1, VCC2 to VCCn, for the respective locations room 1, room 2 to room n. Such a video conferencing client is adapted to receive the video data recorded by the respective cameras and/or laptops or other devices equipped with cameras and coupled to it, at its respective location, to perform an initial processing on the video data , e.g. by compressing and encoding the data, or by mixing the data into one composed video in case several cameras are coupled to one video conferencing client, followed by encoding this resulting composed video.

Such a video conferencing client can be implemented by means of hardware or software or a combination of both. It can also be implemented on one of the laptops in the conference room, this laptop then being equipped with the video conferencing client functionality.

The encoded video from the respective participating locations, denoted video room 1, video room2 to video room n is then transmitted by the respective video conferencing clients VCC1 to VCCn to the video conferencing server S. Such a video conferencing server can be realized by means of software and/or hardware or a combination of both. It can be physically present in one single processor, or distributed amongst several devices. For sake of simplicity it is depicted in Figs. 1b and 1c as one single entity S. This video conferencing server S, apart from having the functionality for setting up the video conferencing session, further comprises a composing and analysis module VAD, being amongst others adapted to generate from the respective video data video room1 to video roomn, received from the respective locations, several respective display video data for being re-transmitted to the respective clients for subsequent decoding and display on the respective display devices D1 , D2 to Dn. These respective display videos are denoted video display 1, videodisplay2 to videodisplay n. These display video data may comprise composed video images from the other rooms, or only one video from one single room, e.g. a room wherein a participant is giving a presentation. In Fig. 1b a situation is depicted where each room only has one display device, denoted D1, D2 to Dn. However in other embodiments, such as depicted in fig. 1c, more display devices can be present in one single room, e.g. by means of the display on a personal computer, or a mobile phone, a smart television, a laptop, a game console, etc. All these devices are coupled to the video conferencing client in the room where these display devices are located, and receive the same video content from the video conferencing client. However, it is possible, by human or other input, to change the view as displayed, e.g. a user can focus or select a person out of his view on his laptop, mobile phone. Or the display settings can be modified during display on a large TV screen, etc.

Alternatively it is also possible that several streams are generated by the VAD for being transmitted to one room, such that the conferencing client in that room can further select and distribute the display videos to the devices present in the room.

Embodiments of the present invention aim to provide a method for determining video attention of a to be alerted participant . This participant is in the example depicted in figs. 1b and 1c denoted user 1, and is sitting in room 1. In order to notify the video conferencing server S that user 1 indeed desires to be alerted upon others, in a different location, paying visual attention to him or her, this participant provides an input signal U1 to the video conferencing client VCC1 of the location he/she is presently located. This signal is further transmitted by VCC1 to the video composing and analysis module VAD of the video conferencing server S.

This user input signal can be generated by an end user device such as a mobile Phone, a laptop, a game console, etc. It may be generated upon request by the user, or can be preconfigured in this end-user device such that whenever this end-user devices registers itself to the video conferencing system, such a request is generated. This user input signal can comprise a request from the user for being informed upon another participant of another location watching him/her. In addition this user input signal can also indicate to which end-user device the video conferencing system has to provide this informationor alerting signal back. This can be the case in situations where this user has more than one end-user device coupled to the conferencing system e.g. a mobile phone and a laptop. The user can e.g. send the request U1 from his/her mobile phone, indicating to be alerted on his/her laptop, or vice versa, or can request the alert to be provided to both devices.

The video composing and analysis module VAD then further is adapted to performing a first analysis of the respective display video data video display1, video display 2, ...,video display n for determining the identity of the respective video participants displayed on these respective display video data for being transmitted and shown on the respective display devices D1 to Dn. Furthermore VAD is adapted to check whether user 1 forms part of the respective video participants displayed in the other respective display video data (video display 2 to video display n). VAD is also adapted to perform a second analysis of the respective video data (video room1, video room 2, ..., video room n) for determining the activity performed by the first plurality of participants in said respective video locations, and for combining the results of said first analysis and said second analysis for thereby determining whether user 1 is indeed being watched by at least some other participant, at another location. In the latter case, VAD is further adapted to generate a trigger signal, denoted TU1, for transmission to the video conferencing client VCC1 in room 1, which is coupled via a wireless or wired separate communication to a personal device MD1 of user 1 . This personal end-user device can be a laptop, a smart phone, a gaming console,... . Alternatively it can also be a fixed device such as a fixed telephone, a fixed computer, etc placed in the video conferencing room.

Figure 2 shows an embodiment of such a video composing and analysis module VAD . In this embodiment VAD comprises a virtual director module VDA which, apart from receiving the videos from the different locations, and generating therefrom the display videos for being retransmitted to the respective locations, also performs these two types of analyses for providing information on who is displayed where (subject ID, which display device, location of the display device), and which activities are performed by who (who is doing what ID, act X). This is done by means of analysis of the camera feeds. Activities can be notions such as *reading, paying attention* and *typing,* but it also includes looking at a certain location. The accuracy of this activity detection depends on the algorithms used and the available camera feeds, so there is usually also a reliability value associated with the given activity.

The first type of data is abbreviated by C1 and the second by C2. Both types of information are provided to a decision module DM, which is also adapted to receive the signal from user 1 who wants to be alerted. This module will then determine whether user 1 is indeed viewed by a participant in another location, and, if so, to generate a trigger signal TU1 for being transmitted back to VCC1.

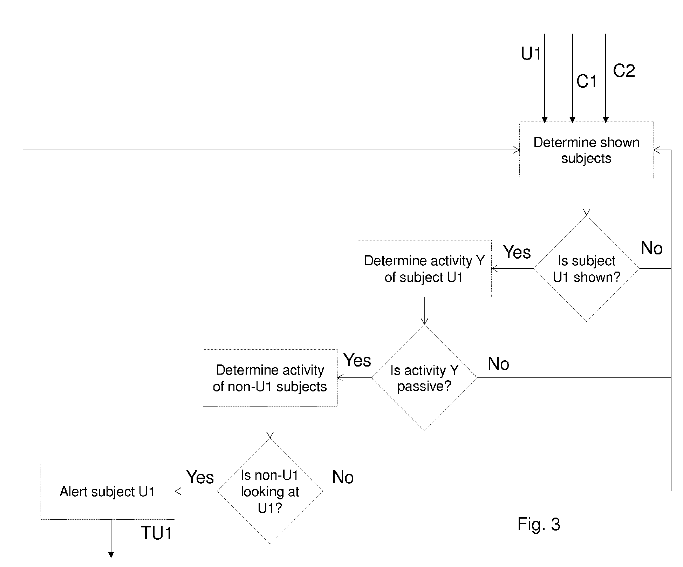

Figure 3 illustrates a flowchart of an embodiment the method. First of all the shown subjects in all rooms are determined. This information comes from the virtual director module VDA, by means of input signals C1 and C2. When subject X (the one who wants to be alerted when he/she is being watched) is shown, we move to the next step. This involves the analysis of the activity of subject X. With certain activities it is normal that the subject should get attention, e.g. when giving a presentation. In those cases, the activity is marked as "active" and no alert will be given. In other activities, here marked as "passive", it is assumed that the activity does not imply attention onto the subject. In this case we should move on to the next step. The alert should only be given when non-X subjects are looking at X. This is determined by analysis of the activities of all other subjects. When someone is looking at subject X, he/she is alerted via the provision of a trigger signal to a personal device of this user, which, upon receipt thereof can provide a sound, or a visual, or a tactile signal for alerting this user.

The personal user device can be chosen dependent on the situation. This can be a personal mobile device or a laptop, a game console, an intelligent watch, etc. In general any end-user device capable of connecting itself to the video conferencing system such that it can send and receive signals informing the system of a request to be alerted upon being watched by another participant, and being capable of receiving from the system such a trigger signal confirming this fact, are suitable devices. The shared screens will not be used as an trigger for everyone due to privacy concerns. In case of a laptop, the system will first try to alert the subject via a personal screen on this laptop or tone or sound. In case of a mobile phone the latter alerting signals can also be used, in addition to vibration signals. If this is available, an overlay over the conversation can also be provided with the alert. This could be a detailed representation on who is watching him/her, however a more symbolic indicator is probably more suitable as it distracts less from the conversation. If the personal screen is on the laptop is not available, another personal mobile device such as a mobile phone can also be used if available e.g. in case the subject started the conferencing app on the mobile phone. In this case a symbolic representation of the alert can also be used in order to provide a quick and clear interpretation of the alert. Something as simple as lighting up the whole screen in red could already be enough to convey the message in a clear and concise way.

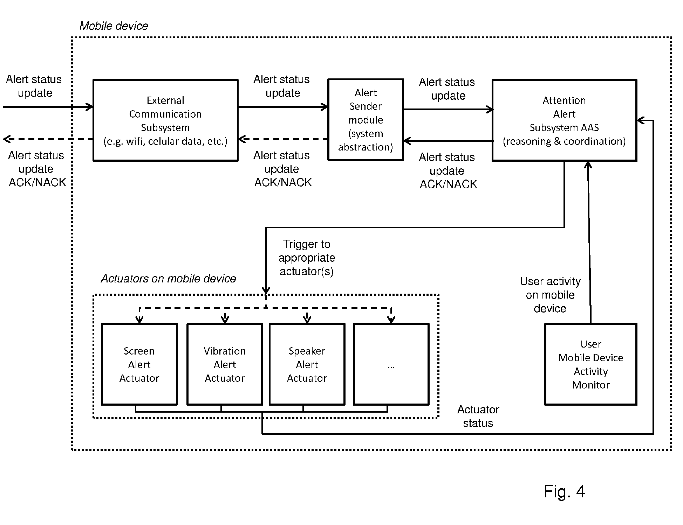

Fig. 4 depicts a more detailed implementation of a mobile device adapted to implement these aspects of the invention. A device-specific communication functionality is situated in the external communication system block. This module will send the received attention alert status updates to the Alert Sender module.. This module translates the attention-alert-system specific properties into a generic format that will be used within the device. This way, many attention-alert-systems, also denoted attention-alert sources, can be used and only a specific block needs to be created per specific system.

The Attention Alert Subsystem AAS receives these alert updates. They contain, next to the signal whether or not to trigger an alert, also information about the preferences of the attention-alert-system with regards to what actuators should be used. For a video conferencing application, one probably should not use the speaker of the mobile device in order to indicate an attention alert as this could interrupt the conversation. The AAS can decide by itself whether or not to follow these preferences e.g. when alternative actuators are not available, or have too little chance to be received by the user.

The AAS also receives local 'user activity' updates. The updates can be very diverse, and could range from detecting whether the user is using his/her device at this time (e.g. screen is on, and user is touching the screen) to more indirect things like the values of the built-in gyroscope to detect whether the user is walking. Al this information is used by the AAS in order to determine which triggers should be send to the available actuators. These actuators also send their current status to the AAS. It might, for example, not be interesting to have the screen be used as an actuator for the attention alert when the user is doing certain tasks on it.

The end-user device will thus make sure that the user is triggered in an optimal, context sensitive manner taking into account both local- and global information. As such it is tuned to the context of the attention-alert system(s) together with the local end-user system.

While the principles of the invention have been described above in connection with specific apparatus, it is to be clearly understood that this description is made only by way of example and not as a limitation on the scope of the invention, as defined in the appended claims.

## Claims

1. Method for determining video attention of a to be alerted participant (user 1) of a multi-location video conference taking place between a first plurality of participants comprising said to be alerted participant (user1), said first plurality of participants being distributed over a second plurality of locations (room1, room2, ... , roomn), said method comprising the steps of
- receiving a signal (U1) from said to be alerted participant (user1)
- transmitting respective video data (video room1, video room2,...,video room n) from said respective locations to a video composing an analysis module (VAD)
- generating by said video composing and analysis module (VAD) respective display video data (video display1, video display 2,...,video display n) from said respective video data (video room1, video room 2, ..., video room n) for being transmitted back and being displayed to and in said respective locations
- performing a first analysis of the respective display video data (video display1, video display 2, ...,video display n) for determining the identity of the respective video participants displayed and for checking whether said to be alerted participant (user 1) forms part of the respective video participants displayed in the respective display video data (video display1, video display 2,...,video display n),
- performing a second analysis of the respective video data (video room1, video room 2, ..., video room n) for determining the activity performed by the first plurality of participants in said respective video locations (room1, room2, ..., roomn),
- combining the results of said first analysis and said second analysis for thereby determining whether said to be alerted participant (user 1) is being watched by at least some other participant in another location, and in case said to be alerted participant is being watched by at least some other participant in another location,
- alerting said to be alerted participant (user 1) via the provisioning of a trigger signal (TU1) to a personal device (MD1) of said to be alerted participant (user 1).

2. Video composing and analysis module (VAD) being adapted to receive from respective video conferencing clients (VCC1,VCC2,...VCCn) respective video data (video room1, video room2,..., video roomn) , and at least one signal(U1) indicative of a participant (user1) of a multi-location video conference to be alerted upon being watched by another participant in another location,
- to generate from said respective video data, respective display video data (videodisplay 1, videodisplay2,...,videodisplayn) for re-transmission to said respective video conferencing clients (VCC1, VCC2,..,VCCn) ,
- to perform a first analysis of the respective display video data (videodisplay 1, videodisplay2,...,videodisplayn) for determining the identity of the respective video participants displayed in said respective display video data and for checking whether said to be alerted participant (user 1) forms part of the respective video participants displayed in the respective display video data (video display1, video display 2,...,video display n),
- to perform a second analysis of the respective video data (video room1, video room 2, ..., video room n) for determining the activity performed by a first plurality of participants in said respective video locations (room1, room2, ..., roomn),
- to combine the results of said first analysis and said second analysis for thereby determining whether said to be alerted participant (user 1) is being watched by at least some other participant in another location, and in case said to be alerted participant is being watched by at least some other participant in another location,
- to generate a trigger signal (TU1) for transmission to the video conferencing client (VCC1) in the location of said participant to be alerted .

3. Video conferencing client (VCC1) adapted to receive from at least one camera (cam1) in a video conferencing location (room1) at least one video recording signal, to generate from said at least one video recording signal a respective video data signal (video room 1) for provision to a video composing and analysis module (VAD), said video conferencing client (VCC1) further being adapted to receive from a participant (user 1) in said video conferencing location an input signal (U1) indicative of said participant desiring for being alerted upon said participant being watched by at least one other participant in another video conferencing location (room2,...,roomn), said video conferencing client (VCC1) further being adapted to receive from said video composing and analysis module display video data (video display1) for being distributed to at least one display device in said location coupled to said video conferencing client (VCC1), said video conferencing client (VCC1) further being adapted to receive from said video composing and analysis module (VAD) a trigger signal (TU1) for further provisioning to a personal device(MD1) of said participant to be alerted .

4. Video conferencing system comprising a plurality of video conferencing clients in accordance with claim 3 and a video composing and analysis module in accordance with claim 2.

5. End-user device (MD1) communicatively coupled to a video conferencing system in accordance to claim 4, , said end-user device (MD1) being adapted to register itself to said video conferencing system, to provide a signal (U1) indicative of the user of said end-user device desiring to be alerted upon being watched by another participant in another location of a video conference in which said video conferencing client is involved, said end-user device being further adapted to identify whether a signal (TU1) received from said video conferencing client concerns a trigger signal being indicative of said user of said end-user device being watched by another participant in another location of said video conference, and, if so, to activate an actuating means within said end-user device.

6. End-user device (MD1) according to claim 5, wherein said actuating means is a display, or a sound generating device, or a vibrating device.

7. End-user device (MD1) in accordance with claims 5 or 6, wherein said end-user device is a handheld mobile device.

8. A computer program adapted to perform the method according to claim 1.

9. A computer readable storage medium comprising instructions to cause a data processing apparatus to carry out the steps as set out in claim 1.
